# EUROPEAN PATENT SPECIFICATION

(11) **EP 3 618 395 B1**
(45) Date of publication and mention of the grant of the patent: **30.12.2020**
(21) Application number: 18877315.4
(22) Date of filing: 12.07.2018
(51) Int. Cl.: H04L 29/06

(54) **METHOD AND DEVICE FOR PROTECTING AGAINST HTTP FLOOD ATTACK**
VERFAHREN UND VORRICHTUNG ZUM SCHUTZ VOR HTTP-ÜBERFLUTUNGSANGRIFFEN
PROCÉDÉ ET DISPOSITIF DE PROTECTION CONTRE LES ATTAQUES PAR INONDATION HTTP

(30) Priority: 19.06.2018 CN 201810631486
(43) Date of publication of application: 04.03.2020
(73) Proprietor: Wangsu Science & Technology Co., Ltd., Shanghai 200030 (CN)
(72) Inventor: Ma, Tao, Shanghai 200030 (CN); Yang, Guang, Shanghai 200030 (CN)
(74) Representative: de Arpe Fernandez, Manuel
(86) International application number: PCT/CN2018/095433
(87) International publication number: WO 2019/242052

(56) References cited:
- CN-A- 105 306 411
- CN-A- 105 656 843
- CN-A- 105 939 201
- CN-A- 106 789 983
- CN-A- 107 171 885
- US-A1- 2008 086 434
- US-A1- 2008 086 435
- ALBERTO AVRITZER ET AL: "Monitoring for security intrusion using performance signatures", PERFORMANCE ENGINEERING, ACM, 2 PENN PLAZA, SUITE 701 NEW YORK NY 10121-0701 USA, 28 January 2010 (2010-01-28), pages 93-104, XP058135337, DOI: 10.1145/1712605.1712623 ISBN: 978-1-60558-563-5

## Description

### FIELD OF DISCLOSURE

The present disclosure generally relates to the field of computer network security technology and, more particularly, relates to a method and apparatus for defending an HTTP flood attack.

### BACKGROUND

The Hypertext Transfer Protocol flood (HTTP flood) attack is a method mainly used for attacking servers. Currently, the method for defending an HTTP flood attack is to set a protection device between a client terminal and a server. After the client terminal establishes a Transmission Control Protocol (TCP) connection with the server, the client terminal may transmit an HTTP request to the server. After obtaining the HTTP request, the protection device uses a preset protection strategy to verify the HTTP request, and transmits the HTTP request to the server after the verification is passed. If the verification is not passed, the protection device intercepts the HTTP request to prevent the attacker from transmitting the HTTP request to attack the server.

With the evolution of attack and defense confrontation, the attack programs configured on some attackers are already able to analyze the general protection strategies, so as to break through some simple protection strategies. At the same time, some attackers may also analyze the attack outcome during the attack. When the outcome is not desirable, an attacker may enhance the attack intensity and attack type, so as to break through the present protection strategy.

In general, a protection strategy needs to be configured in advance. For a configuration administrator, because the attack intensity and attack type cannot be predicted, a pre-configured protection strategy may be either too loose, resulting in a poor protection outcome, or too strict, which then affects normal user requests. When facing attacks with different intensities and different types, the operation and maintenance personnel need to adjust the strategy for different attack modes, and thus the timeliness is very poor and the effective protection strategies may be not issued in time, resulting in interrupted service due to the attacks. Additionally, in the protection process, the operation and maintenance personnel may not evaluate whether the protection strategy used for the present attack is effective or not. Accordingly, the personnel need to pay very close attention to the attack and defense states and the impact on the requests from normal users, and thus the operation and maintenance are really challenging.

The document US 20080086435 A1 discloses a system and method to detect and mitigate denial of service and distributed denial of service HTTP "page" flood attacks. It describes that detection of attack/anomaly is made according to multiple HTTP traffic characteristics including rate-based and rate-invariant parameters in both traffic directions.

The document CN 105656843 A discloses an application layer protection method and apparatus based on verification and network equipment.

### BRIEF SUMMARY OF THE DISCLOSURE

To solve the problems in the existing technologies, the embodiments of the present disclosure provide a method and apparatus for defending an HTTP flood attack. The technical solutions are as defined in the claims.

The methods and apparatuses for defending an HTTP flood attack provided by the embodiments of the present disclosure may automatically detect the attack mode and the protection outcome, and automatically adjust the used protection strategy in response to different attack modes, which not only improves the protection outcome, but also greatly reduces the impact on the normal use of users, while the timeliness is also good.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a system architecture according to some embodiments of the present disclosure;
FIG. 2 is a flowchart of a method for defending an HTTP flood attack according to some embodiments of the present disclosure;
FIG. 3 is a flowchart of another method for defending an HTTP flood attack according to some embodiments of the present disclosure;
FIG. 4 is a schematic structural diagram of an apparatus for defending an HTTP flood attack according to some embodiments of the present disclosure; and
FIG. 5 is a schematic structural diagram of a protection device according to some embodiments of the present disclosure.

### DETAILED DESCRIPTION

To make the objective, technical solutions, and advantages of the present disclosure clearer, the present disclosure will be made in detail hereinafter with reference to the accompanying drawings.

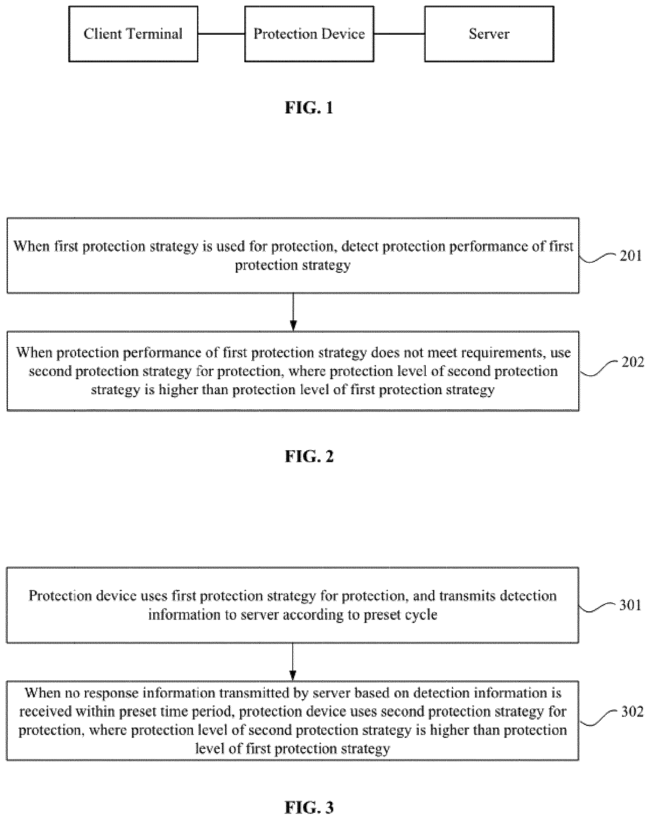

The embodiments of the present disclosure provide a method for defending an HTTP flood attack, which may be applied to a system architecture shown in FIG. 1. The system architecture includes a client terminal, a protection device, and a server. The client terminal connects to the protection device and the protection device connects to the server. The client terminal includes normal client terminals as well as attackers. The server may be a server cluster. The protection device receives and verifies an HTTP request transmitted to the server by the client terminal, shields and filters a malicious request, while allowing a normal request to be forwarded to the server.

When there is no attack, the protection device may not enforce protection. That is, after receiving an HTTP request, the protection device does not need to verify the security of the HTTP request, but transmits the HTTP request directly to the server. The process of determining whether an attack exists or not by the protection device includes determining the number of HTTP requests received within each predetermined time interval (e.g., 5 seconds). When the number of HTTP requests received within any predetermined time interval exceeds a threshold, i.e., a second threshold, it may be considered that an attack exists. If the number of HTTP requests received within a predetermined time interval does not exceed the threshold, it may be considered that there is no attack. It should be noted that each predetermined time interval may be continuous in time, that is, the end time of the last predetermined time interval is the start time of the next predetermined time interval. Or each predetermined time interval may also be not continuous in time.

When there is an attack, the protective device starts to enforce the protection. The process of enforcing the protection by the protection device includes: the protection device receives an HTTP request transmitted by the client terminal, parses the received HTTP request, and transmits the data for acquiring the verification information to the client terminal when the HTTP request does not include the verification information; after receiving the data, the client terminal acquires the verification information corresponding to the data, and re-transmits an HTTP request containing the verification information to the protection device; after receiving the HTTP request, the protection device parses the verification information in the HTTP request and performs verification; when the verification is passed, the HTTP request is transmitted to the server. When attacking a server, an attacker is generally only in charge of transmitting a large number of HTTP requests, but does not receive the verification information transmitted by the protection device or does not parse the verification information after receiving it. Therefore, the attacker may not transmit a new HTTP request that includes the verification information. An HTTP request that does not pass the verification by the protection device is considered to be a malicious request transmitted by an attacker, which will be discarded and will not be forwarded to the server. An HTTP request verified by the protection device is considered to be a normal request and will be forwarded to the server through the protection device. Therefore, the protection device may intercept an HTTP request transmitted by an attacker, thereby preventing the malicious request of the attacker from affecting the server.

The protection device stores a protection strategy set, where the protection strategy set includes at least two protection levels of protection strategies, for example, a 302-redirect verification protection strategy, a JavaScript script verification protection strategy, or a picture verification protection strategy. In a specific implementation, the protection strategies may be classified into different levels according to the levels of difficulty of attackers in cracking the protection strategies. For example, for the 302-redirect verification protection strategy, the data transmitted by the protection device includes the verification information, so the verification information may be acquired directly from the data. For the JavaScript script verification protection strategy, a corresponding calculation needs to be performed according to the program(s) in the script to generate the verification information, and thus an attacker is less likely to crack the JavaScript script verification protection strategy. The protection level of the JavaScript script verification protection strategy is higher than the protection level of the 302-redirect verification protection strategy. For the picture verification protection strategy, a user needs to input the verification information according to the picture, and the protection level is even higher.

When entering the protection state from an unprotected state, the protection device may enforce the protection by using a default protection strategy, such as a protection strategy with the lowest protection level. When such protection strategy is used for protection, the server may be still under attack, then a protection strategy higher than the existing protection level may be used. A description for this process will be made in detail hereinafter.

FIG. 2 is a flowchart of a method for defending an HTTP flood attack according to some embodiments of the present disclosure. The method is specifically applied to a protection device, that is, is implemented by a protection device. The method may include the following steps.

Step 201: When a first protection strategy is used for protection, detecting the protection performance of the first protection strategy.

The first protection strategy may be any protection strategy in the protection strategy set.

Step 202: When the protection performance of the first protection strategy does not meet the requirements, using a second protection strategy for protection, where the protection level of the second protection strategy is higher than the protection level of the first protection strategy.

When there is an attack, that is, when the protection device beings to enforce the protection, the protection device may detect the protection performance, or the protection outcome, of the first protection strategy currently used. When the protection performance of the first protection strategy does not meet the requirements, a protection strategy with a higher level of protection is used instead, resulting in an automatic adjustment of the protection strategy.

The embodiments of the present disclosure provide two modes to detect the protection performance of the first protection strategy.

Detection Mode 1: Collecting the number or the traffic volume of HTTP requests transmitted to the server within a predetermined time interval.

When an attacker attacks the server, the attacker transmits a large number of malicious requests. When the currently used protection strategy has a poor protection performance against the present malicious attack, the malicious requests may be not detected and mistakenly considered as legitimate HTTP requests, and thus a large number of malicious requests are forwarded to the server. Accordingly, when it is detected that the number of HTTP requests transmitted to the server within a predetermined time interval is greater than a first threshold, or the traffic volume of HTTP requests transmitted to the server is greater than a preset traffic volume, it may be determined that the protection performance of the currently used protection strategy is poor, and the requirements are not met. At this point, a protection strategy with a protection level higher than the currently used protection strategy may be needed for the protection.

Detection Mode 2: Transmitting detection information to the server according to a preset cycle; and when no response information, transmitted by the server based on the detection information, is received within a preset time period, determining that the protection performance of the first protection strategy does not meet the requirements.

In a specific implementation, the protection device may enforce the protection by using the Detection Mode 1 and the Detection Mode 2 simultaneously, or by using only one of the two detection modes.

In the embodiments of the present disclosure, the protection strategy being used may be upgraded multiple times. That is, the protection strategy may be upgraded whenever the protection performance of the currently used protection strategy is found not to meet the requirements. For instance, the currently used protection strategy is the 302-redirect verification protection strategy. After the upgrade, the JavaScript script verification protection strategy may be used. Once the server is found to still under the attack after the enforcement of the JavaScript script verification protection strategy, another upgrade may be conducted and the image verification protection strategy is used instead. Each protection strategy in the protection strategy set may be ordered according to the levels of protection. When upgrading a protection strategy, another protection strategy that is one level higher than the present protection strategy may be used. If the present protection strategy is at the highest protection level, the service state of the server may be further detected. When the server is detected to be not in the service state, it means that the protection strategy with the highest protection level may not protect the present attack, then the protection levels of the protection strategies may be further enhanced.

When the protection device enforces the protection, the number of HTTP requests received in each predetermined time interval may be collected. When each number of HTTP requests received within a preset number of successive predetermined time intervals is not greater than the second threshold, it means that there is no attack anymore and the protection may be stopped. In the embodiments of the present disclosure, the first threshold and the second threshold may be the same or different, which is not specifically limited herein.

The Detection Mode 2 will be made in detail hereinafter.

FIG. 3 is a flowchart of a method for defending an HTTP flood attack according to some embodiments of the present disclosure. The method is specifically applied to a protection device, that is, is implemented by a protection device. The method may include the following steps.

Step 301: The protection device uses the first protection strategy for protection, and transmits detection information to the server according to a preset cycle.

When there is an attack, that is, when the protection device starts to enforce the protection, the protection device may transmit the detection information to the server according to a preset cycle, to detect whether the server is in the service state, and determine the protection outcome of the present protection strategy against the present attack based on the service state of the server. When the protection device is in the protection state, the service state of the server may be continuously monitored until the protection is stopped.

Step 302: When no response information, transmitted by the server based on the detection information, is received within a preset time period, the protection device uses a second protection strategy for protection, where the protection level of the second protection strategy is higher than the protection level of the first protection strategy.

When the server is in the service state, the server may receive the detection information transmitted by the protection device, and transmit response information to the protection device according to the detection information. When the server is attacked and not in the service state, the server may not receive the detection information transmitted by the protection device, or may not transmit the response information to the protection device according to the detection information, and thus the protection device may not receive the response information. The situation when the protection device does not receive the response information includes the situation when no information is received and the situation when the information is received with a notified error.

The protection device may use two implementations to transmit the detection information to the server, which will be illustrated below separately.

### Implementation 1

The protection device transmits preset detection information to the server according to a preset cycle. That is, the detection information transmitted by the protection device is the same every time. The preset detection information may be a complete HTTP request, or include only the request header of an HTTP request. The format of the detection information is not specifically limited herein, as long as the used detection information is able to be identified by the server. The server pre-stores response information corresponding to the detection information. That is, the detection information corresponds to a fixed page, and a fixed domain name may be used to access the page.

When the server is in the service state, the server acquires the pre-stored response information after receiving the preset detection information, and then transmits the response information to the protection device. After receiving the response information, the protection device may determine that the server is in a normal service state. When no response information, transmitted by the server based on the detection information, is received within a preset time period, it may be determined that the server is not in the service state. The present protection strategy may be then upgraded to a higher-level protection strategy.

It should be noted that the server may not pre-store the response information corresponding to the detection information, and the detection information may be a complete HTTP request. The server may perform a normal response service based on the HTTP request, and then transmit the response information to the protection device. The response service is similar to a response service based on an HTTP request transmitted by the client terminal.

### Implementation 2

The protection device replaces the source address in a target HTTP request with the Internet Protocol (IP) address of the protection device according to a preset cycle, and uses the HTTP request containing the IP address of the protection device as the detection information, where the target HTTP request may be any verified request among the HTTP requests transmitted by the client terminals. The protection device then transmits the detection information to the server. The server may perform a normal response service according to the HTTP request and transmit the response information to the protection device. When the response information transmitted by the server based on the detection information is received, it indicates that the server is in the service state. The protection device replaces the target address in the response information with the source address in the target HTTP request, and transmits the response information with the target address having been replaced.

In the disclosed implementation, the HTTP request transmitted by the client terminal is used as the detection information after the replacement of the source address, which allows the server to transmit the response information to the protection device according to the detection information. After receiving the response information, the protection device replaces the target address, to allow the client terminal to receive the response information. This may not only detect whether the server is in the service state, but also does not affect the normal access of the client terminal, and also does not increase the burden on the server caused by periodically transmitting additional detection information.

The methods for defending an HTTP flood attack provided by the embodiments of the present disclosure may automatically detect the attack mode and the protection outcome, and may automatically adjust the used protection strategy in response to different attack modes. That is, by default, a protection strategy with a relatively low protection level is used for protection. When the present protection strategy is detected to be insufficient to protect the present attack and consequently the protection outcome is undesirable, the present protection strategy may be automatically upgraded to a higher-level protection strategy until the upgraded protection strategy may protect the present attack. In this way, the protection outcome may be improved, and the impact on the normal use of users may be greatly reduced, while the timeliness is also good.

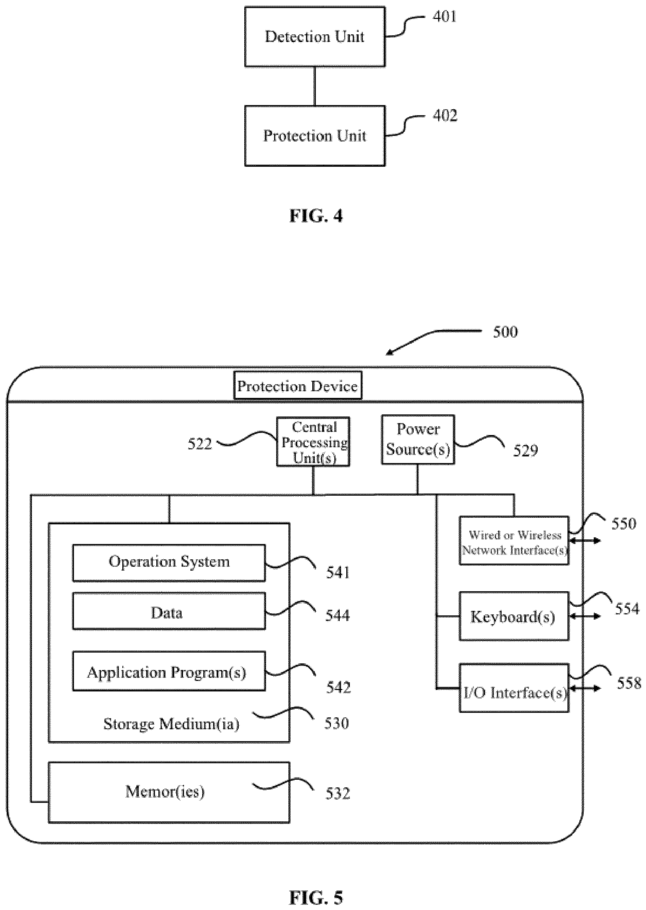

FIG. 4 is a schematic structural diagram of an apparatus for defending an HTTP flood attack according to some embodiments of the present disclosure. The apparatus may be configured in a protection device, or the apparatus itself is a protection device. The apparatus may include a detection unit 401 and a protection unit 402.

The detection unit 401 is configured to detect the protection performance of the first protection strategy when the first protection strategy is used for protection.

The protection unit 402 is configured to use a second protection strategy for protection when the protection performance of the first protection strategy does not meet the requirements, where the protection level of the second protection strategy is higher than the protection level of the first protection strategy.

Preferably, the detection unit 401 is specifically configured to collect the number of HTTP requests transmitted to the server within a predetermined time interval; and the protection unit 402 is specifically configured to, when the number of HTTP requests transmitted to the server is greater than the first threshold, determine that the protection performance of the first protection strategy does not meet the requirements.

Preferably, the detection unit 401 is further configured to collect the traffic volume of the HTTP requests transmitted to the server within a predetermined time interval; and the protection unit 402 is further configured to, when the traffic volume of the HTTP requests transmitted to the server is greater than a preset traffic volume, determine that the protection performance of the first protection strategy does not meet the requirements.

Preferably, the detection unit 401 is further configured to transmit detection information to the server according to a preset cycle; and the protection unit 402 is further configured to, when no response information, transmitted by the server based on the detection information, is received within a preset time period, determine that the protection performance of the first protection strategy does not meet the requirements.

Preferably, the detection information is preset detection information; and the detection unit 401 is further configured to, when the server is in a service state, receive pre-stored response information transmitted by the server based on the preset detection information.

Preferably, the detection unit 401 is further configured to: replace the source address in a target HTTP request with the IP address of the protection device according to the preset cycle to obtain detection information including the IP address of the protection device, where the target HTTP request is any one of verified requests among HTTP requests transmitted by client terminals; and transmit the detection information to the server.

Preferably, the detection unit 401 is further configured to: when the response information transmitted by the server based on the detection information is received, replace the target address in the response information with the source address in the target HTTP request; and transmit the response information with the target address having been replaced.

According to the invention, the protection unit 402 is further configured to: collect the number of HTTP requests received within each predetermined time interval; and when each number of HTTP requests received within a preset number of successive predetermined time intervals is not greater than a second threshold, stop the protection.

According to the invention, the protection unit 402 is further configured to: collect the number of HTTP requests received within a predetermined time interval; and when the number of HTTP requests received within the predetermined time interval is greater than the second threshold, use the first protection strategy for protection.

The apparatuses for defending an HTTP flood attack provided by the embodiments of the present disclosure may automatically detect the attack mode and the protection outcome, and automatically adjust the used protection strategy in response to different attack modes, which not only improves the protection outcome, but also greatly reduces the impact on the normal use of users, while the timeliness is also good.

It should be noted that, when enforcing the protection, an apparatus for defending an HTTP flood attack provided by the above embodiments is illustrated merely by way of example of the foregoing division of the functional modules. In real applications, the foregoing functions may be allocated into and implemented by different functional modules according to the needs. That is, the internal structure of the apparatus may be divided into different functional modules to complete all or part of the above-described functions. In addition, the apparatuses for defending an HTTP flood attack and the methods for defending an HTTP flood attack provided by the foregoing embodiments are attributed to the same concept. Accordingly, for the specific implementation process of the apparatuses, the embodiments for the methods may be referred to, details of which will not be described again here.

FIG. 5 is a schematic structural diagram of a protection device according to some embodiments of the present disclosure. The protection device 500 may vary considerably depending on the configuration or performance, and may include one or more central processing units 522 (e.g., one or more processors) and memories 532, one or more storage media 530 (e.g., one or one mass storage devices) for storing application programs 542 or data 544. Here, the memories 532 and the storage media 530 may be a volatile storage device or a non-volatile storage device. The programs stored on the storage media 530 may include one or more modules (not shown), each of which may include a series of operating instructions for the protection device. Further, the central processing units 522 may be configured to communicate with the storage media 530, and execute, on the protection device 500, a series of operating instructions stored in the storage media 530.

The protection device 500 may further include one or more power sources 529, one or more wired or wireless network interfaces 550, one or more input and output interfaces 558, one or more keyboards 554, and/or one or more operating systems 541, such as Windows Server™, Mac OS X™, Unix™, Linux™, FreeBSD™, and the like.

The protection device 500 may include a memory and one or more programs, where the one or more programs are stored in the memory and configured to be executed by one or more processors to implement the one or more programs that include instructions configured to perform the defending methods described above.

A person skilled in the art may understand that all or part of the steps of the above embodiments may take the form of hardware implementation or the form of implementation of programs for instructing relevant hardware. The programs may be stored in a computer-readable storage medium. The storage medium may be a read-only memory, a magnetic disk, or an optical disk, etc.

## Claims

1. A method for defending an HTTP flood attack, the method being applied to a protection device (500), and the method comprising:
collecting the number of HTTP requests received within each predetermined time interval;
when the number of HTTP requests received within the predetermined time interval is greater than a second threshold, using a first protection strategy for protection; and
when each number of HTTP requests received within a preset number of successive predetermined time intervals is not greater than the second threshold, stopping the protection;
when the first protection strategy is used for protection (201), detecting a protection performance of the first protection strategy; and
when the protection performance of the first protection strategy does not meet requirements, using a second protection strategy for the protection (202), wherein a protection level of the second protection strategy is higher than a protection level of the first protection strategy and the second protection strategy and the first protection strategy are different verification types.

2. The method according to claim 1, wherein detecting the protection performance of the first protection strategy further includes:
collecting the number of HTTP requests transmitted to a server within a predetermined time interval, and when the number of HTTP requests transmitted to the server is greater than a first threshold, determining that the protection performance of the first protection strategy does not meet the requirements; or
collecting a traffic volume of HTTP requests transmitted to a server within a predetermined time interval, and when the traffic volume of HTTP requests transmitted to the server is greater than a preset traffic volume, determining that the protection performance of the first protection strategy does not meet the requirements.

3. The method according to claim 1, wherein detecting the protection performance of the first protection strategy further includes:
transmitting detection information to a server according to a preset cycle (301), and when no response information transmitted by the server based on the detection information is received within a preset time period (302), determining that the protection performance of the first protection strategy does not meet the requirements.

4. The method according to claim 3, wherein the detection information is preset detection information, and after transmitting the detection information to the server according to the preset cycle, the method further includes:
when the server is in a service state, acquiring, by the server, pre-stored response information after receiving the preset detection information; and
transmitting, by the server, the response information to the protection device.

5. The method according to claim 3, wherein transmitting the detection information to the server according to the preset cycle further includes:
replacing a source address in a target HTTP request with an IP address of the protection device according to the preset cycle to obtain detection information including the IP address of the protection device, wherein the target HTTP request is one of verified requests among HTTP requests transmitted by client terminals; and
transmitting the detection information including the IP address of the protection device to the server.

6. The method according to claim 5, after transmitting the detection information to the server, the method further includes:
when response information, transmitted by the server based on the detection information, is received, replacing a target address in the response information with the source address in the target HTTP request; and
transmitting the response information with the target address having been replaced.

7. An apparatus for defending an HTTP flood attack, comprising:
a detection unit (401) that is configured to, when a first protection strategy is used for protection, detect a protection performance of the first protection strategy; and
a protection unit (402) that is configured to, when the protection performance of the first protection strategy does not meet requirements, use a second protection strategy for the protection, wherein a protection level of the second protection strategy is higher than a protection level of the first protection strategy and the second protection strategy and the first protection strategy are different verification types;
wherein the detection unit is further configured to collect the number of HTTP requests received within each predetermined time interval; and
the protection unit is further configured to:
when the number of HTTP requests received within the predetermined time interval is greater than a second threshold, use the first protection strategy for protection, and
when each number of HTTP requests received within a preset number of successive predetermined time intervals is not greater than the second threshold, stop the protection.

8. The apparatus according to claim 7, wherein:
the detection unit is further configured to collect the number of HTTP requests transmitted to a server within a predetermined time interval; and
the protection unit is further configured to, when the number of HTTP requests transmitted to the server is greater than a first threshold, determine that the protection performance of the first protection strategy does not meet the requirements.

9. The apparatus according to claim 7, wherein:
the detection unit is further configured to collect a traffic volume of HTTP requests transmitted to a server within a predetermined time interval; and
the protection unit is further configured to, when the traffic volume of HTTP requests transmitted to the server is greater than a preset traffic volume, determine that the protection performance of the first protection strategy does not meet the requirements.

10. The apparatus according to claim 7, wherein:
the detection unit is further configured to transmit detection information to a server according to a preset cycle; and
the protection unit is further configured to, when no response information, transmitted by the server based on the detection information, is received within a preset time period, determine that the protection performance of the first protection strategy does not meet the requirements.

11. The apparatus according to claim 10, wherein the detection information is preset detection information, and the detection unit is further configured to:
when the server is in a service state, receive pre-stored response information transmitted by the server based on the preset detection information.

12. The apparatus according to claim 10, wherein the detection unit is further configured to:
replace a source address in a target HTTP request with an IP address of a protection device (500) according to the preset cycle to obtain detection information including the IP address of the protection device, wherein the target HTTP request is one of verified requests among HTTP requests transmitted by client terminals; and
transmit the detection information including the IP address of the protection device to the server.

13. The apparatus according to claim 12, wherein the detection unit is further configured to:
when response information, transmitted by the server based on the detection information, is received, replace a target address in the response information with the source address in the target HTTP request; and
transmit the response information with the target address having been replaced.

## Patentansprüche

1. Eine Verteidigungsmethode gegen einen HTTP-Flood-Angriff, bei der die Methode in einer Schutzvorrichtung (500) zur Anwendung kommt und die Methode Folgendes umfasst:
Sammeln der Anzahl an HTTP-Anforderungen, die innerhalb eines vorbestimmten Zeitraumes eintreffen;
wenn die Anzahl an eingetroffenen HTTP-Anforderungen innerhalb eines vorbestimmten Zeitraumes grösser ist als ein zweiter Schwellenwert, Anwendung einer ersten Schutzstrategie zum Schutz; und
wenn jede Anzahl an eingetroffenen HTTP-Anforderungen innerhalb einer vorbestimmten Anzahl von aufeinanderfolgenden, vorbestimmten Zeiträumen nicht grösser ist als der zweite Schwellenwert, wird der Schutz gestoppt;
wenn die erste Schutzstrategie zum Schutz (201) zur Anwendung kommt, Ermittlung einer Schutzleistung der esrten Schutzstrategie und
wenn die Schutzleistung der ersten Schutzstrategie nicht die Anforderungen erfüllt, Anwendung einer zweiten Schutzstrategie zum Schutz (202), wobei ein Schutzgrad der zweiten Schutzstrategie höher ist als der Schutzgrad der ersten Schutzstrategie, und die zweite Schutzstrategie und die erste Schutzstrategie verschiedener Verifikationsart sind.

2. Die Methode gemäss Anspruch 1, bei der die Ermittlung der Schutzleistung der ersten Schutzstrategie weiter Folgendes umfasst:
Sammeln der Anzahl von an einen Server innerhalb eines vorbestimmten Zeitraumes übermittelten HTTP-Anforderungen, und wenn die Anzahl von übermittelten HTTP-Anforderungen an den Server grösser ist als ein erster Schwellenwert, Bestimmung, dass die Schutzleistung der ersten Schutzstrategie nicht die Anforderungen erfüllt; oder
Sammeln eines Verkehrsvolumens von übermittelten HTTP-Anforderungen an einen Server innerhalb eines vorbestimmten Zeitraumes, und wenn das Verkehrsvolumen der übermittelten HTTP-Anforderungen an den Server grösser ist als das eingestellte Verkehrsvolumen, Bestimmung, dass die Schutzleistung der ersten Schutzstrategie nicht die Anforderungen erfüllt.

3. Die Methode gemäss Anspruch 1, bei der die Ermittlung der Schutzleistung der ersten Schutzstrategie weiter Folgendes umfasst:
Übermittlung der Ermittlungsinformation an einen Server übereinstimmend mit einem voreingestellten Zyklus (301), und wenn keine Anwortsinformation durch den Server basierend auf der Ermittlungsinformation innerhalb eines vorbestimmten Zeitraumes (302) eintrifft, Bestimmung, dass die Schutzleistung der ersten Schutzstrategie nicht die Anforderungen erfüllt.

4. Die Methode gemäss Anspruch 3, bei der die Ermittlungsinformation eine voreingestellte Ermittlungsinformation ist, und nach Übermittlung der Ermittlungsinformation an den Server übereinstimmend mit dem voreingestellten Zyklus, die Methode weiter Folgendes umfasst:
Wenn der Server sich in einem Betriebszustand befindet, Akquisition durch den Server von vorgespeicherter Antwortsinformation nach Empfang der voreingestellten Ermittlungsinformation; und
Übermittlung der Antwortsinformation durch den Server an die Schutzvorrichtung.

5. Die Methode gemäss Anspruch 3, bei der die Übermittlung der Ermittlungsinformation an den Server übereinstimmend mit dem voreingestellten Zyklus weiter Folgendes umfasst:
Ersatz einer Quellenadresse in einer Ziel-HTTP-Anforderung der Schutzvorrichtung übereinstimmend mit dem voreingestellten Zyklus zwecks Erhalt von Ermittlungsinformation einschliesslich der IP-Adresse der Schutzvorrichtung, wobei die Ziel-HTTP-Anforderung eine von den überprüften Anforderungen der durch das Kundenterminal übermittelten HTTP-Anforderungen ist; und
Übermittlung der Ermittlungsinformation einschliesslich der IP-Adresse der Schutzvorrichtung an den Server.

6. Die Methode gemäss Anspruch 5, bei der nach Übermittlung der Ermittlungsinformation an den Server die Methode weiter Folgendes umfasst:
Wenn die Antwortsinformation durch den Server basierend auf der Ermittlungsinformation eintrifft, Ersatz einer Zieladresse in der Antwortsinformation durch die Quellenadresse in der Ziel-HTTP-Anforderung; und
Übermittlung der Anforderungsinformation, wobei die Zieladresse ersetzt wird.

7. Ein Apparat zur Verteidigung gegen einen HTTP-Flutangriff, der Folgendes umfasst:
Eine Ermittlungseinheit (401), die konfiguriert ist, um eine Schutzleistung der ersten Schutzstrategie zu ermitteln, wenn eine erste Schutzstrategie zum Schutz zur Anwendung kommt;
eine Schutzeinheit (402), die konfiguriert ist, um eine zweite Schutzstrategie für den Schutz anzuwenden, wenn die Schutzleistung der ersten Schutzstrategie nicht die Anforderungen erfüllt, wobei ein Schutzgrad der ersten Schutzstrategie und der zweiten Schutzstrategie und die erste Schutzstrategie von unterschiedlicher Verifikationsart sind;
wobei die Ermittlungseinheit weiter konfiguriert ist, um die Anzahl von erhaltenen HTTP-Anforderungen innerhalb eines jeden vorbestimmten Zeitraums zu sammeln; und
die Schutzeinheit ist weiter konfiguriert, um für den Schutz die zweite Schutzstrategie anzuwenden, wenn die Anzahl von erhaltenen HTTP-Anforderungen innerhalb des vorbestimmten Zeitraumes grösser ist als ein zweiter Schwellenwert, und um den Schutz zu stoppen, wenn jede Anzahl an erhaltenen HTTP-Anforderungen in einer vobestimmten Anzahl an aufeinanderfolgenden Zeiträumen nicht grösser ist als der zweite Schwellenwert.

8. Der Apparat gemäss Anspruch 7, bei dem:
Die Ermittlungseinheit weiter so konfiguriert ist, dass sie die Anzahl der an den Server übermittelten HTTP-Anforderungen innerhalb eines vorbestimmten Zeitraumes sammelt; und
die Schutzeinheit ist weiter so konfiguriert, dass sie bestimmt, dass die Schutzleistung der ersten Schutzstrategie nicht die Anforderungen erfüllt, wenn die Anzahl der an den Server übermittelten HTTP-Anforderungen grösser ist, als der erste Schwellenwert.

9. Der Apparat gemäss Anspruch 7, bei dem:
Die Ermittlungseinheit ausserdem so konfiguriert ist, dass sie ein Verkehrsvolumen der an den Server übermittelten HTTP-Anforderungen innerhalb eines vorbestimmten Zeitraumes sammelt; und
die Schutzeinheit ist ausserdem so konfiguriert, dass sie bestimmt, dass die Schutzleistung der ersten Schutzstrategie nicht die Anforderungen erfüllt, wenn das Verkehrsvolumen der an den Server übermittelten HTTP-Anforderungen grösser ist als das eingestellte Verkehrsvolumen.

10. Der Apparat gemäss Anspruch 7, bei dem:
Die Ermittlungseinheit ausserdem so konfiguriert ist, dass sie Ermittlungsinformation an einen Server übereinstimmend mit einem voreingestellten Zyklus übermittelt; und
die Schutzeinheit ist ausserdem so konfiguriert, dass sie bestimmt, dass die Schutzleistung der ersten Schutzstrategie nicht die Anforderungen erfüllt, wenn keine durch den Server basierend auf der Feststellungsinformation übermittelte Antwortsinformation empfangen wird.

11. Der Apparat gemäss Anspruch 10, bei dem die Ermittlungsinformation eine voreingestellte Ermittlungsinformation ist, und die Ermittlungseinheit ausserdem so konfiguriert ist, dass sie durch den Server übermittelte, vorgespeicherte Antwortsinformation empfängt, wenn sich der Server in einem Betriebszustand befindet.

12. Der Apparat gemäss Anspruch 10, bei dem die Ermittlungseinheit ausserdem so konfiguriert ist, dass sie:
Eine Quellenadresse in einer Ziel-HTTP-Anforderung durch eine IP-Adresse einer Schutzeinheit (500) übereinstimmend mit dem voreingestellten Zyklus ersetzt, um Ermittlungsinformation zu erhalten, die die IP-Adresse der Schutzvorrichung einschliesst, wobei die Ziel-HTTP-Anforderung eine der überprüften Anforderungen von den durch das Kundenterminal übermittelten HTTP-Anforderungen ist; und
Übermittlung der Ermittlungsinformation einschliesslich der IP-Adresse der Schutzvorrichtung an den Server.

13. Der Apparat gemäss Anspruch 12, bei dem die Ermittlungseinheit ausserdem so konfiguriert ist, dass sie eine Zieladresse in der Antwortsinformation durch die Quellenadresse in der Ziel-HTTP-Anforderung ersetzt, wenn die durch den Server basierend auf der Ermittlungsinformation übermittelte Antwortsinformation eingeht; und
Übermittlung der Antwortsinformation, bei der die Zieladresse ersetzt wurde.

## Revendications

1. Une méthode pour se défendre d'une attaque par inondation HTTP, la méthode étant appliquée à un dispositif de protection (500) et comprenant les pas suivants:
collecter la quantité de demandes HTTP reçues dans un intervalle de temps prédéterminé;
lorsque la quantité de demandes HTTP reçues dans un intervalle de temps prédéterminé est plus grande qu'un deuxième seuil, utiliser une première stratégie de protection; et
lorsque chaque quantité de demandes HTTP reçues dans un nombre prédéfini d'intervalles de temps successifs n'est pas plus grande que le deuxième seuil, arrêter la protection;
lorsque la première stratégie de protection est utilisée pour la protection (201), détecter l'efficacité de la protection de la première stratégie de protection; et
lorsque l'efficacité de la protection de la première stratégie de protection ne remplit pas les exigences requises, utiliser une seconde stratégie de protection pour la protection (202), où le niveau de protection de la deuxième stratégie de protection est plus élevé que le niveau de protection de la première stratégie de protection ; et la deuxième stratégie de protection et la première stratégie de protection sont des types de vérification différents.

2. La méthode conformément à la revendication 1, où la détection de l'efficacité de la protection de la première stratégie de protection comprend en outre les pas suivants:
collecter la quantité de demandes HTTP transmises à un serveur dans un intervalle de temps prédéterminé, et, lorsque la quantité de demandes HTTP transmises au serveur est plus grande que le premier seuil, déterminer que l'efficacité de la protection de la première stratégie de protection ne remplit pas les exigences requises; ou
collecter un volume de trafic de demandes HTTP transmises à un serveur dans un intervalle de temps prédéterminé, et, lorsque le volume de trafic de demandes HTTP transmises au serveur est plus grand que le volume de trafic prédéfini, déterminer que l'efficacité de la protection de la première stratégie de protection ne remplit pas les exigences requises.

3. La méthode conformément à la revendication 1, où la détection de l'efficacité de la protection de la première stratégie de protection comprend en outre les pas suivants:
transmettre l'information de détection à un serveur conformément à un cycle prédéfini (301), et, si on ne reçoit pas d'information de réponse transmise par le serveur sur la base de l'information de détection, dans une période de temps prédéfinie (302), déterminer que l'efficacité de la protection de la première stratégie de protection ne remplit pas les exigences requises.

4. La méthode conformément à la revendication 3, où l'information de détection est une information de détection prédéfinie, et, après que l'information de détection soit transmise au serveur, conformément au cycle prédéfini, la méthode comprend en outre les pas suivants:
lorsque le serveur a le statut en-service, acquérir, par le serveur, l'information de réponse pré-stockée après avoir reçu l'information de détection prédéfinie; et
transmettre, par le serveur, l'information de réponse au dispositif de protection.

5. La méthode conformément à la revendication 3, où la transmission au serveur de l'information de détection conformément au cycle prédéfini comprend en outre les pas suivants:
remplacer une adresse source dans une demande HTTP cible par une adresse IP du dispositif de protection, conformément à un cycle prédéfini, pour obtenir l'information de détection comprenant l'adresse IP du dispositif de protection, où la demande HTTP cible est l'une des demandes vérifiées parmi les demandes HTTP transmises par les terminaux clients; et
transmettre au serveur l'information de détection comprenant l'adresse IP du dispositif de protection.

6. La méthode conformément à la revendication 5, où, après avoir transmis au serveur l'information de détection, la méthode comprend en outre les pas suivants:
lorsque l'information de réponse, transmise par le serveur sur la base de l'information de détection est reçue, remplacer l'adresse cible de l'information de réponse par l'adresse source de la demande HTTP cible; et
transmettre l'information de réponse une fois que l'adresse cible a été remplacée.

7. Un appareil pour se défendre d'une attaque par inondation HTTP, comprenant:
une unité de détection (401) qui est configurée de manière à détecter, quand une première stratégie de protection est utilisée pour la protection, l'efficacité de protection de la première stratégie de protection; et
une unité de protection (402) qui est configurée pour utiliser, quand l'efficacité de protection de la première stratégie de protection ne remplit pas les exigences requises, une deuxième stratégie de protection pour la protection, où le niveau de protection de la deuxième stratégie de protection est plus élevé que le niveau de protection de la première stratégie de protection, et la deuxième stratégie de protection et la première stratégie de protection sont des types de vérification différents;
où l'unité de détection est configurée en outre pour collecter la quantité de demandes HTTP reçues dans chaque intervalle de temps prédéterminé; et
l'unité de protection est configurée en outre dans le but suivant:
lorsque la quantité de demandes HTTP reçues dans l'intervalle de temps prédéterminé est plus grande que le deuxième seuil, utiliser la première stratégie de protection pour la protection; et
lorsque chaque quantité de demandes HTTP reçues dans une quantité prédéfinie d'intervalles de temps successifs prédéterminés n'est pas plus grande que le deuxième seuil, arrêter la protection.

8. L'appareil conformément à la revendication 7, où:
l'unité de détection est configurée en outre pour collecter la quantité de demandes HTTP transmises à un serveur dans un intervalle de temps prédéterminé; et
l'unité de protection est configurée en outre pour, lorsque la quantité de demandes HTTP transmises au serveur est plus grande que le premier seuil, déterminer que l'efficacité de la protection de la première stratégie de protection ne remplit pas les exigences requises.

9. L'appareil conformément à la revendication 7, où:
l'unité de détection est configurée en outre pour collecter un volume de trafic de demandes HTTP transmises à un serveur dans un intervalle de temps prédéterminé; et
l'unité de protection est configurée en outre pour, lorsque le volume de trafic de demandes HTTP transmises au serveur est plus grand qu'un volume de trafic prédéfini, déterminer que l'efficacité de la protection de la première stratégie de protection ne remplit pas les exigences requises.

10. L'appareil conformément à la revendication 7, où:
l'unité de détection est configurée en outre pour transmettre l'information de détection à un serveur conformément à un cycle prédéfini; et
l'unité de protection est configurée en outre pour, lorsque ne reçoit pas d'information de réponse transmise par le serveur, sur la base de l'information de détection, dans une période de temps prédéfinie, déterminer que l'efficacité de la protection de la première stratégie de protection ne remplit pas les exigences requises.

11. L'appareil conformément à la revendication 10, où l'information de détection est une information de détection prédéfinie, et l'unité de détection est configurée en outre pour:
lorsque le serveur a le statut en-service, recevoir l'information de réponse pré-stockée, transmise par le serveur sur la base de l'information de détection prédéfinie.

12. L'appareil conformément à la revendication 10, où l'unité de détection est configurée en outre dans le but de:
remplacer une adresse source dans une demande HTTP cible par une adresse IP du dispositif de protection (500), conformément à un cycle prédéfini, pour obtenir l'information de détection comprenant l'adresse IP du dispositif de protection, où la demande HTTP cible est l'une des demandes vérifiées parmi les demandes HTTP transmises par les terminaux clients; et
transmettre au serveur l'information de détection comprenant l'adresse IP du dispositif de protection.

13. L'appareil conformément à la revendication 12, où l'unité de détection est configurée en outre pour:
lorsque l'information de réponse, transmise par le serveur sur la base de l'information de détection, est reçue, remplacer l'adresse cible de l'information de réponse par l'adresse source de la demande HTTP cible; et
transmettre l'information de réponse une fois que l'adresse cible a été remplacée.
